# EUROPEAN PATENT SPECIFICATION

(11) **EP 4 540 545 B1**
(45) Date of publication and mention of the grant of the patent: **29.07.2026**
(21) Application number: 23741758.9
(22) Date of filing: 14.06.2023
(51) Int. Cl.: F16L 13/02, B29C 65/06

(54) **JOINING LINED PIPES**
VERBINDUNG VON AUSGEKLEIDETEN ROHREN
ASSEMBLAGE DE TUYAUX DOUBLÉS

(30) Priority: 14.06.2022 GB 202208707
(43) Date of publication of application: 23.04.2025
(73) Proprietor: Subsea 7 Limited, Sutton, Surrey SM2 5BN (GB)
(72) Inventor: FEENEY, Allan Andrew, Bearsden G61 2PD (GB)
(74) Representative: Keltie LLP
(86) International application number: PCT/GB2023/051558
(87) International publication number: WO 2023/242571

(56) References cited:
- US-A- 4 784 409
- US-A1- 2018 094 760
- US-A1- 2018 272 616

## Description

This invention relates to pipes with polymer liners, and in particular to the challenges of joining together abutting sections of such pipes during pipeline fabrication. The invention is particularly concerned with joining portions of polymer liners within the surrounding pipe sections. Typically, this involves fusing a liner bridge to adjoining parent liners when sections of lined pipe are welded together end-to-end.

Corrosion protection is a key issue for pipelines used in the oil and gas industry, which are usually made of carbon steel to minimise cost over often great lengths. Polymer liners are used to mitigate internal corrosion of such pipelines as an alternative to more expensive liners of corrosion-resistant alloys. Polymer liners also aid thermal insulation of the pipeline, which may be important in subsea applications. Such liners may be of fibre-reinforced composites or solid plastics, for example high-density polyethylene (HDPE).

When fabricating a lined pipeline from pipe sections or pipe joints abutting end-to-end, it is necessary to weld together those lengths of lined steel pipe while maintaining a continuous corrosion-resistant internal surface between them. However, welding polymer-lined steel pipe is not straightforward because the liner could be damaged by the heat of welding. A special bridging technique is therefore used, involving heatresistant shielding or materials. In particular, bridging fittings known as liner bridges are used to ensure continuity between the parent liners of the pipe sections. A liner bridge can also be described as an inner sleeve or fitting to ensure continuity of the liner. A typical liner bridge is disclosed in EP 0366299.

The interfaces between the liner bridge and the adjoining parent liners must be sealed to close potential leak paths for the pressurised fluid that will be carried by the pipeline in use. Sealing may be achieved mechanically or by bonding or by fusion. For example, WO 96/26384 describes a well-known mechanical technique to seal the liner ends using compression rings. However, unhelpfully, that solution lengthens the manufacturing process and creates discontinuities in the internal diameter of the pipeline.

Time saving is particularly important where pipe-joining operations lie on the critical path of pipeline manufacture and could therefore have a significant effect on the overall duration of a pipelaying campaign. This applies especially where pipeline fabrication is performed at sea, for example in S-lay operations. In this respect, pipelaying vessels have extremely high capital cost and operating costs and require a time-limited weather window in which to complete a pipelaying campaign.

The present invention is particularly concerned with sealing polymer liners by welding or fusion. Primarily, the prior art approach to fusing pipe liners has been to use electrofusion techniques. Electrofusion involves a localised application of resistive or inductive heating to soften and fuse the liner material at the interfaces between the ends of a liner bridge and the adjoining parent liners.

As one example of such prior art, WO 2010/041016 is assigned to an affiliate of the Applicant and corresponds to an electrofusion fitting that is offered commercially by that affiliate under the registered trade mark 'LinerBridge'. Specifically, WO 2010/041016 discloses an electrofusion fitting that is interposed to connect parent liners before the surrounding metal pipe sections are welded together. The fitting is a tubular sleeve of a thermoplastics material that has heating wires around each end.

In use, the parent liners are machined back from the end of each pipe section to create a socket or recess. The electrofusion fitting is then inserted into the recess in the end of one pipe section to abut its parent liner. Next, current is passed through the heating wires via electrical connections that extend through the fitting. This causes the thermoplastic materials of the fitting and of the parent liner near the wires to melt and fuse together. The process is repeated to fuse the fitting to the parent liner of the other pipe section, after which the metal outer pipes of the pipe sections themselves are welded together around their circumferential interface in a butt-welding or girth-welding operation.

In electrofusion fittings like those disclosed in WO 2010/041016, electrical terminals, connections and wires are embedded permanently in the polymer material of the fitting. For example, contact terminals may be fitted in respective bores extending radially through the tubular wall of the fitting, each terminal being exposed to an inward side of the wall to serve as an electrode for conducting energising current to an electrofusion element of the fitting.

The requirement for electrical components to heat an electrofusion fitting presents various challenges. For example, where current must be supplied from within the fitting, it can be awkward to effect electrical connections with the terminals at a location deep within the interior of adjoining pipe sections. More significantly, the bore around each terminal represents a potential weak point and leak path. Thus, in an otherwise similar electrofusion fitting, WO 2019/171045 proposes various solutions to ensure that leak paths do not arise between terminals and their surrounding bores.

To remove the need for bores through the wall of the fitting, electrical leads could extend outwardly from the outer side of the fitting and through a gap between pipe sections held end-to-end. However, open-bevel weld preparation required to leave such a gap has fallen out of favour in modern subsea pipeline fabrication.

It is not straightforward to energise an electrofusion fitting from its outer side when using the closed-bevel automatic pipeline welding techniques that are now prevalent in the art of pipeline fabrication. WO 2013/136062 reflects this challenge by proposing that a hole may be drilled through a closed bevel to provide access for a probe to supply electrical power to an electrofusion fitting within the abutting lined pipes. Once the fitting has been fused to the adjoining parent liners, the probe is withdrawn from the hole and the hole is then filled during the subsequent welding process. However, these additional steps complicate and lengthen the manufacturing process.

Taking a different approach, GB 2554866 describes how the heating coil of an electrofusion fitting can be energised and heated wirelessly by electromagnetic induction. This removes the requirement for direct electrical connection to the heating coils when joining sections of lined pipe. However, as a strong and large magnetic field is necessary to generate sufficient heat around the full circumference of the fitting, power consumption tends to be high.

To reduce power consumption in an inductive arrangement, GB 2569549 proposes to energise an induction coil disposed within a lined pipe to heat only a portion of a circumferential interface between liner sections. The polymer material of the liner sections is thereby melted only at that portion of the interface to fuse locally. The induction coil is then moved along the interface to heat successive portions of the interface above the melting temperature of the liner material, thereby to propagate fusing circumferentially. That solution saves power but could prolong the manufacturing process.

US 2018/094760 and US 4784409 each disclose methods of joining pipes in which a polymer fitting is friction welded to a polymer liner of a pipe section.

On considering the prior art described above, it will be apparent that technicians in the art of lined pipeline fabrication have fallen into a long-established mindset based on a shared technical philosophy, namely to design ever more sophisticated electrofusion fittings and techniques. The present invention departs from that technological path, and indeed goes directly against prevailing wisdom, by demonstrating how a simple liner bridge fitting that has no need of electrical heating components can still be fused effectively to adjoining parent liners. Thus, the invention avoids the constraints of the prior art by, counter-intuitively, simplifying the fitting.

In broad terms, the invention achieves this objective by adopting and enabling a rotational friction welding technique. Specifically, the invention teaches how relative rotational movement between a liner bridge and adjoining lined pipelines can be effected to fuse the liner bridge to the parent liners at their mutual interfaces.

So, against this background, the invention resides in a method of joining polymer-lined pipe sections end-to-end, the method comprising: friction welding a polymer liner bridge fitting to parent liners of the pipe sections; and welding metallic outer pipes of the pipe sections to each other. The fitting is preferably engaged telescopically with the pipe sections and in particular with their parent liners before the friction welding operation.

The friction welding operation is preferably effected by relative rotational movement between the fitting and the pipe sections about a common longitudinal axis. That relative rotational movement may comprise successive unidirectional revolutions, or partial revolutions, or may be effected in successively opposite angular directions.

The relative rotational movement may, for example, be effected at an angular velocity corresponding to 50 rpm to 5000 rpm. More generally, friction welding may be effected by imparting a relative velocity in the range of 1m/s to 20m/s at interfaces between the fitting and the parent liners.

The method may comprise inserting a spinning tool into the fitting, engaging the tool with the fitting, and rotating at least part of the tool and the fitting to effect the relative rotational movement. The tool may be engaged with the fitting by expanding the tool within the fitting in an outward clamping action and/or by mechanical engagement between the tool and the fitting. The tool may be advanced longitudinally within at least one of the pipe sections before being engaged with the fitting and may be anchored within at least one of the pipe sections before the tool and the fitting are rotated together.

The pipe sections may be forced axially toward each other during the friction welding operation. The outer pipes may be welded to each other before, after or during the friction welding operation.

Conveniently, the fitting can be friction welded to the parent liners simultaneously. In that case, preliminarily, an end portion of the fitting can be inserted into an end socket formation of a first of the pipe sections while leaving an opposite end portion of the fitting protruding from that first pipe section. Then, the outer pipe of a second of the pipe sections can be brought into abutting relation with the outer pipe of the first pipe section while receiving the protruding end portion of the fitting into an end socket formation of that second pipe section. The fitting may be forced axially into abutment with the parent liners of the pipe sections as a result of bringing the outer pipe of the second pipe section into abutting relation with the outer pipe of the first pipe section.

It is also possible to friction weld the fitting to the parent liner of a first of the pipe sections before friction welding the fitting to the parent liner of a second of the pipe sections. In that case, an end portion of the fitting may be inserted into an end socket formation of a first of the pipe sections while leaving an opposite end portion of the fitting protruding from that first pipe section, before friction welding the fitting to the parent liner of the first pipe section. Next, the outer pipe of a second of the pipe sections can be brought into abutting relation with the outer pipe of the first pipe section while receiving the protruding end portion of the fitting into an end socket formation of that second pipe section, before friction welding the parent liner of the second pipe section to the fitting. For example, the fitting can move and the first pipe section can be held stationary when friction welding the fitting to the parent liner of the first pipe section. Conversely, the second pipe section can move and the fitting can be held stationary when friction welding the parent liner of the second pipe section to the fitting.

Friction-welded interfaces between the fitting and the parent liners can be cooled while applying inward axial pressure from the parent liners to the fitting and/or while applying outward radial pressure to the fitting.

Recognising that polymer liners are not widely used in S-lay operations due to a lack of a commercially viable liner bridge connector or fitting, the invention enables the use of an all-polymer liner bridge fitting in S-lay closed-bevel applications. The fitting is installed into a machined socket in the pre-installed polymer parent liner of one pipe section and the end of an adjoining pipe section is pulled over the fitting during fit-up of the weld to be made between the carbon steel outer pipes. Internal tooling is positioned within the fitting and friction welding is performed by rotating the fitting while the fitting is pressed against the pre-installed parent liner to create friction and heat. When the desired temperature is reached, rotation stops and the fitting is held in position. Once the friction weld has cooled sufficiently, the internal tooling is removed. The solution provided by the invention is highly effective while being low in cost and quick to install.

Rotational friction welding is known for joining small tubes made entirely of polymer material but is not known for joining the liners of metal pipes that require additional metal-to-metal welding operations. For example, US 9249905 mentions integrally connecting a polymer hose and its fitting by welding. Radio frequency welding and rotational friction welding are contemplated in that document but neither of those welding techniques are explained.

EP 2112417 discloses a connector for an air conditioning or power steering circuit of a motor vehicle. Its objective is to replace metal connector fittings with plastics fittings on metal tubes that form the circuit. The connector comprises a polymeric tubular fitting that is mounted on a metal tube using rotational friction welding. This involves relative rotation of the fitting around the tube under an axial welding pressure and then applying a slightly greater axial holding pressure during cooling following rotation.

Thus, EP 2112417 discloses relative rotation between a polymer fitting and a concentric metal tube but in that case, the fitting is external to the tube and therefore is readily accessible to be engaged by a rotary drive. Also, EP 2112417 only teaches joining the polymer fitting to the metal tube: it does not teach welding the polymer fitting to another polymer fitting or welding the metal tube to another metal tube. Indeed, its only teaching in relation to joining metal tubes is to do so indirectly by mechanical engagement between their respective polymer fittings. Consequently, EP 2112417 teaches away from the present invention.

Embodiments of the invention implement a method to join an inner cylindrical or tubular polymer sleeve or fitting to the polymer liner within a pipeline, the method comprising: providing a polymer-lined pipe; providing the fitting comprising at least one interface for a spinning tool and comprising an end that contacts with the polymer liner; inserting a complementary connection of a spinning tool, such as an electric drill, inside the polymer sleeve and connecting it to the interface; and using the spinning tool to rotate the polymer sleeve at least partially around the axis of the pipe to effect friction welding of the fitting with the liner.

The method may also comprise: providing a first lined pipe; partially inserting and aligning the sleeve inside the first lined pipe until the sleeve abuts the liner of the first lined pipe; providing a second lined pipe, aligning it with the first lined pipe and abutting it with the first lined pipe so that the sleeve also abuts the liner of the second lined pipe; inserting a spinning tool through the first or second lined pipe; and rotating the polymer sleeve around the axis of the pipeline using a spinning tool to effect friction welding of the polymer sleeve with the liner of both lined pipes.

The method may comprise oscillating the sleeve with partial rotation in both directions. The method may also comprise preliminarily preparing a bevel, step or cut at the liner end to define a contact area or interface between the liner and the fitting.

The sleeve may, for example, be rotated at a velocity of between 1m/s and 20m/s, or from 50 rpm or above to 5000 rpm or below.

The lined pipes suitably comprise a steel outer pipe in addition to a polymer liner. The polymer of the liner and/or the sleeve may be a thermoplastic or more specifically a polyolefin, polypropylene or polyethylene. The liner and the sleeve may be made of the same material or of the same type of material or of different materials that are compatible for the purpose of friction welding.

The spinning tool may comprise at least one expandable mandrel to ensure alignment of the fitting and the liner.

More generally, embodiments of the invention implement a method to weld two polymer lined pipes together, the method comprising friction-welding an inner sleeve with the liners of both pipes and butt-welding the two pipes.

A middle section of the sleeve may comprise external thermal protection to screen the sleeve during welding of the outer pipes. The middle section of the sleeve could have a smaller outer diameter than end sections or outward sections of the sleeve.

An objective of the invention is to allow fusion-bonding or welding of a liner bridge to a parent pipe liner, which may be of HDPE or other fusible material, without requiring the liner bridge or the parent liners to comprise electrical connectors or conductors. Typically, a closed J-bevel is required for narrow-gap mechanised welding of polymer-lined steel pipe. Consequently, a welding process for joining the liner bridge to the parent liners has to be effected from inside the pipe.

Liner welding operations can be performed simultaneously to girth- or butt-welding of the outer pipe or before or after that welding operation. Joints at both ends of a liner bridge may be welded simultaneously or one joint can be welded before the other joint is welded.

Preferred embodiments of the invention implement a method for connecting two steel pipes lined by a polymer liner. The method comprises: inserting a polymer bridging insert into the end of a first lined pipe so that a first end of the bridging insert overlaps the parent liner of the first lined pipe; abutting the second lined pipe to the first lined pipe wherein a second end of the bridging insert overlaps the parent liner of the second lined pipe; and butt-welding outer pipes of the lined pipes. The method also comprises: inserting a rotary drive tool into the bore of the lined pipes, engaging the rotary drive tool with the bridging insert; and activating the rotary drive tool to rotate the bridging insert relative to the parent liners.

In summary, the method of the invention involves effecting relative rotational movement between adjoining liner portions of a polymer-lined metal pipe to heat circumferential interfaces between those liner portions. That heat melts and fuses the polymer material locally, separately from welding operations performed on the metal outer pipes. Apparatus for performing the method comprises a rotary drive system for effecting the relative rotational movement. The apparatus may be configured as a carriage that is movable along the pipe.

A method of the invention for joining polymer-lined pipe sections end-to-end comprises friction welding a polymer liner bridge fitting to parent liners of the pipe sections and welding metallic outer pipes of the pipe sections to each other before, during or after the friction welding operation. The fitting may be engaged telescopically with the pipe sections in socket formations formed by the parent liners.

Friction welding can be effected by relative rotational movement between the fitting and the pipe sections about a common longitudinal axis. A spinning tool may be advanced longitudinally within at least one of the pipe sections, inserted into the fitting, anchored within at least one of the pipe sections, engaged with the fitting and rotated to effect the relative rotational movement. This can friction weld the fitting to both of the parent liners simultaneously at interfaces located at respective ends of the fitting.

In order that the invention may be more readily understood, reference will now be made by way of example to the accompanying drawings. In those drawings, each of which is a schematic view in longitudinal section:
Figure 1 shows two sections of lined pipe, the parent liner of a first of those pipe sections having been prepared to define a socket to receive a liner bridge fitting;
Figure 2 shows a liner bridge fitting being inserted into the socket of the first pipe section;
Figure 3 shows a protruding end portion of the fitting received in a socket of a second pipe section in end-to-end abutment with the first pipe section, with axial compression of the fitting between the parent liners of the pipe sections;
Figure 4 shows a rotational welding tool of the invention in a radially contracted state, inserted into the fitting via the second pipe section;
Figure 5 shows the tool now expanded radially into engagement with the fitting and with the pipe sections and rotating the fitting relative to the parent liners of the pipe sections to effect frictional welding at their mutual interfaces;
Figure 6 shows the fitting held stationary relative to the pipe sections to cool the welded interfaces as the tool continues to apply radially-outward pressure on the fitting and axial compression is maintained between the pipe sections;
Figure 7 shows abutting outer pipes of the pipe sections welded together and the tool withdrawn from the pipe sections, leaving a continuous liner defined by the fitting fused with the parent liners of the pipe sections;
Figure 8 shows a variant of the invention in which the tool and the fitting have complementary key formations to effect mechanical engagement between them;
Figure 9 shows a variant of the invention in which the fitting is rotated relative to the parent liner of the first pipe section to effect frictional welding at their mutual interface before bringing the second pipe section into end-to-end abutment with the first pipe section; and
Figure 10 shows the protruding end portion of the fitting received in a socket of the second pipe section now in end-to-end abutment with the first pipe section, the second pipe section then being rotated relative to the first pipe section to effect frictional welding between the fitting and the parent liner of the second pipe section at their mutual interface.

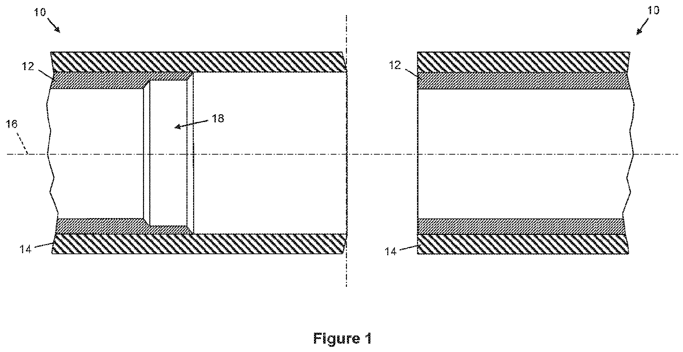

Figure 1 of the drawings shows two lined pipe sections 10. Each pipe section 10 contains a tubular parent liner 12 of thermoplastics material, for example HDPE, in concentric relation with an outer pipe 14 of carbon steel.

The pipe section 10 to the right in Figure 1 is shown as manufactured, with its parent liner 12 extending with full thickness to an end of the outer pipe 14, that end being in a plane orthogonal to a central longitudinal axis 16 of the pipe section 10. Conversely, the pipe section 10 to the left in Figure 1 is shown prepared for fabrication of a pipeline comprising a series of similar pipe sections 10 abutting end-to-end. Specifically, an end of the outer pipe 14 has been bevelled ready for butt-welding to a similar abutting pipe section 10, and the parent liner 12 has had female interface formations 18 machined into its open end.

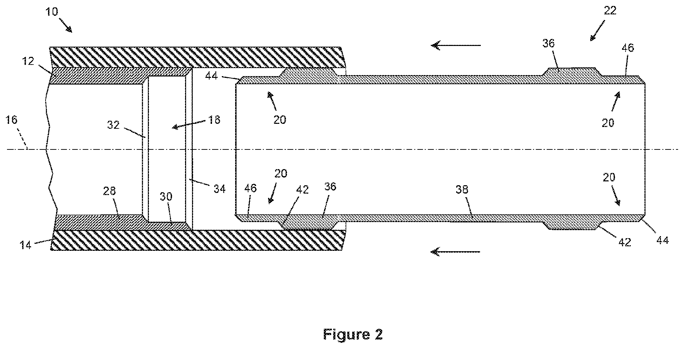

The female interface formations 18 of the liner 12 mate with inverse complementary male interface formations 20 on an end of a tubular liner bridge fitting 22, such a fitting 22 being shown in Figure 2 partially inserted into the open end of the pipe section 10. Thus, the female interface formations 18 of the parent liner 12 form a socket for the male interface formations 20 at an end of the fitting 22.

The fitting 22 comprises an elongate tube that is moulded or machined from a polymer material. The polymer material of the fitting 22 is preferably the same as, or at least compatible for welding with, the material of the parent liners 12, thus for example also being of HDPE.

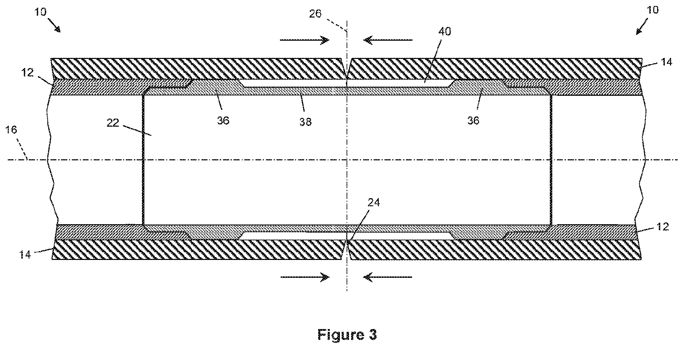

When assembling a pipeline for welding, the fitting 22 is inserted into the end of a pipe section 10 whose parent liner 12 has been prepared as shown on the left in Figure 1. The length of the fitting 22 is approximately twice the depth of the socket defined by the female interface formations 18. Thus, when received telescopically in the socket, about half of the length of the fitting 22 protrudes from the open end of the pipe section 10. Then, a second similarly-prepared pipe section 10 is brought into end-to-end abutment with the first pipe section 10 while surrounding and locating the fitting 22 as shown in Figure 3.

When the second pipe section 10 is brought into end-to-end abutment with the first pipe section 10 at a closed bevel 24, the abutting pipe sections 10 enclose the fitting 22 as shown in Figure 3. The fitting 22 then extends between and overlaps longitudinally with the parent liners 12 of the pipe sections 10, ready to be fused to the parent liners 12 at those mutual interfaces to form a substantially continuous corrosion-resistant inner surface.

All of the interface formations 18, 20 of the parent liners 12 and the fitting 22 are rotationally symmetrical around the common central longitudinal axis 16 of the pipe sections 10. All of those interface formations 18, 20 are also in mirrored relation about a central transverse plane 26 that is orthogonal to the central longitudinal axis 16, that plane 26 being aligned with the interface between the pipe sections 10 and hence with the bevel 24 when the fitting 22 is *in situ* as shown in Figure 3.

Referring back to Figure 2, each parent liner 12 terminates short of an end of the associated pipe section 10 and has a stepped profile in longitudinal section. The stepped shape is defined by a full-thickness body portion 28 and a reduced-thickness end portion 30. This creates an annular shoulder or step 32 between the body portion 28 and the end portion 30 of the parent liner 12 and another annular shoulder or step 34 between the end portion 30 and the inner surface of the outer pipe 14. In cross-section, the steps 32, 34 are concentric with respect to the central longitudinal axis 16.

The fitting 22 has a complementarily-stepped profile in longitudinal section. Internally, the fitting 22 is plain and of uniform diameter. Externally, the fitting 22 has a pair of circumferential integral hoops 36 that protrude radially from the tubular body 38 of the fitting 22 inboard of its ends. When the fitting 22 is *in situ* between the abutting pipe sections 10 as shown in Figure 3, the hoops 36 are parallel to, and spaced symmetrically from, each other about the central transverse plane 26.

An annular insulator recess 40 is defined between the hoops 36 in alignment with the bevel 24. Thermally-insulating material (not shown) may be positioned in the insulator recess 40 or on the body 38 of the fitting 22 at that location to protect the fitting 22 from radiant heat during weld preparation and the welding process itself.

An outboard side of each hoop 36 defines an outer annular shoulder or step 42 that opposes the step 34 between the end portion 30 of a parent liner 12 and the inner surface of the outer pipe 14. Each end of the body 38 of the fitting 22 defines an inner annular shoulder or step 44 that opposes the step 32 between the body portion 28 and the end portion 30 of the parent liner 12. In cross-section, the steps 42, 44 are also concentric with respect to the central longitudinal axis 16.

The steps 32, 34, 42, 44 are preferably radiused or chamfered as shown in the drawings to ease insertion of the fitting 22 into the ends of the pipe sections 10.

End portions 46 of the body 38 of the fitting 22, which extend longitudinally between the steps 40, 42 outboard of the hoops 36, are received telescopically within the reduced-thickness end portions 30 of the parent liners 12. It will therefore be apparent that there is a substantial male-female overlap between the fitting 22 and the parent liners 12, specifically where the protruding end portions 46 of the fitting 22 extend axially outwardly beyond the hoops 36.

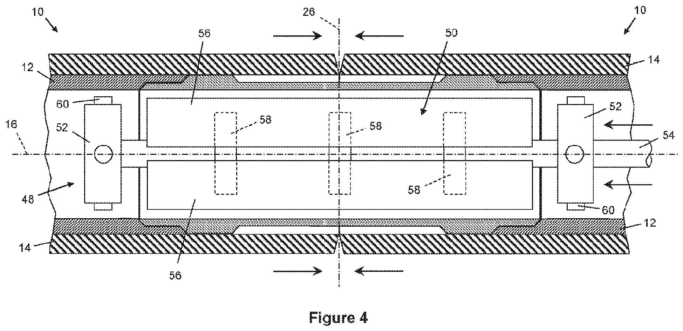

Figure 4 shows a rotational welding tool 48 of the invention advanced within the abutting pipe sections 10 to be positioned at least partially within the fitting 22. The tool 48 may be self-propelled or may be advanced into the pipe sections 10 by, or integrated with, other apparatus that moves within the pipe, such as a line-up clamp.

In this simplified view, the tool 48 is represented schematically as a self-contained unit that slides along the inside of the pipe sections 10. The tool 48 could, however, have wheels or tracks that bear against the inner surface of the parent liners 12 and the fitting 22 to facilitate longitudinal movement of the tool 48.

The tool 48 comprises a body 50 that extends within and aligns axially with the fitting 22. The tool 48 further comprises clamps 52 that are positioned fore and aft of the body 50, hence distally and proximally relative to the body 50. The clamps 52 are spaced apart by more than the length of the fitting 22 to lie outboard of the fitting 22, thus in alignment with the parent liners 12, when the body 50 is longitudinally aligned with the fitting 22.

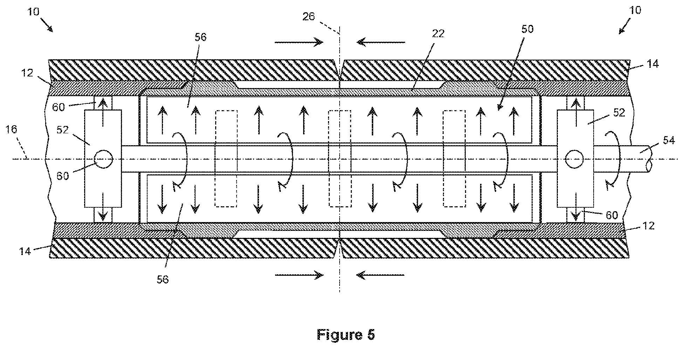

In this example, the tool 48 is supported by a shaft 54 that extends along the central longitudinal axis 16 toward an opposed open end of the second pipe section 10. The shaft 54 also connects the body 50 and the clamps 52. Specifically, the body 50 is fixed to the shaft 54 whereas the shaft 54 can turn within the clamps 52 while remaining in fixed longitudinal relation to the clamps 52. The shaft 54 advances the tool 48 longitudinally as shown in Figure 4 and drives rotation of the fitting 22, as will now be explained with further reference to Figure 5.

The body 50 of the tool 48 comprises shoes 56 that can be driven radially outwardly by actuators 58 into engagement with the fitting 22. Similarly, the clamps 52 comprise pistons 60 that can act radially outwardly against the parent liners 12 to locate the body 50 relative to the fitting 22. Thus, the tool 48 serves as a mandrel or aligner that helps to align the fitting 22 with the parent liners 12. Using the tool 48 as a supporting mandrel in this way provides an advantage over existing polymer liner bridge fittings because it reduces the accuracy required when internally machining the parent liners 12 to form the female interface formations 18.

The shaft 54 and the body 50 fixed to the shaft 54 can then rotate relative to the fixed clamps 52, the shaft 54 being driven by a motor (not shown) that may be positioned within or outside the pipe section 10 along which the shaft 54 extends. This rotation of the body 50, when engaged with the fitting 22, rotates the fitting 22 about the central longitudinal axis 16.

As the fitting 22 rotates relative to the parent liners 12 as shown in Figure 5, axial pressure is maintained between the parent liners 12 and the fitting 22. Axial pressure is created by forcing the pipe sections 10 together about their mutual interface at the central transverse plane 26 aligned with the bevel 24. In this respect, the fitting 22 may be fractionally oversized in length, hence exploiting axial resilience of the fitting 22 and the parent liners 12 to maintain intimate contact between them. Relative angular movement between the fitting 22 and the abutting parent liners 12 under axial pressure causes frictional heating that melts and fuses together their polymer materials at the respective circumferential interfaces.

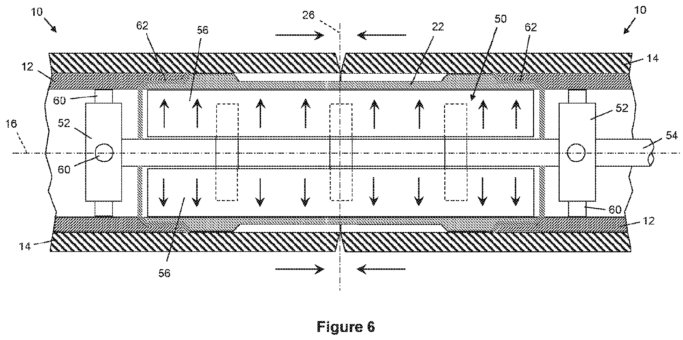

As shown in Figure 6, rotation of the fitting 22 then ceases while the fused interface regions 62 cool and harden. In this respect, Figure 6 shows the body 50 of the tool 48 now held stationary with the shoes 56 still exerting radially outward pressure against the fitting 22. Advantageously, the shoes 56 may extend into alignment with, and maintain radial pressure on, the telescopic interfaces between the ends of the fitting 22 and the parent liners 12. Axial pressure on the fitting 22 may also be maintained during cooling.

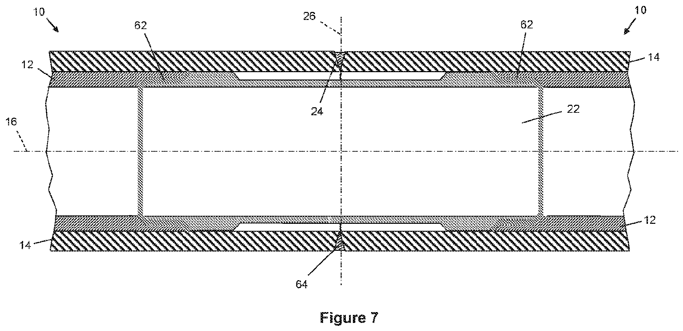

Figure 7 shows the pipe sections 10 after the tool 48 has been withdrawn, leaving a continuous, smooth liner surface defined by the fitting 22 bridging the gap between the parent liners 12. The tool 48 may, for example, be moved longitudinally to fuse another fitting 22 to parent liners 12 of other pipe sections 10 in a similar manner. Figure 7 also shows a weld 64 formed in the bevel 24 at the interface between the outer pipes 14. The weld 64 can be formed by any conventional technique, most conveniently by an automated welding bug that circulates the abutting pipe sections 10 on a circumferential rail clamped to at least one of those pipe sections 10.

While the weld 64 is shown in Figure 7 as being formed after the fitting 22 has been fused to the parent liners 12, the weld 64 could instead be completed before or during fusing of the fitting 22 to the parent liners 12. In this respect, rotation of the fitting 22 during formation of the weld 64 could be helpful to minimise exposure of the fitting 22 to a concentration of radiant welding heat. Fast rotation of the fitting 22 could also induce airflow that dissipates heat in the annular insulator recess 40 defined between the hoops 36 of the fitting 22.

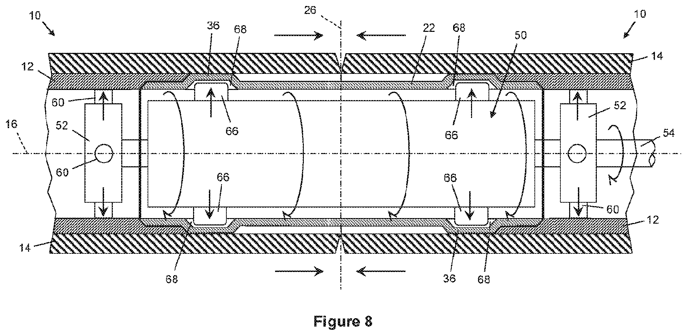

In the embodiment described above, engagement between the fitting 22 and the body 50 of the tool 48 is achieved by the outward clamping action of the shoes 56 and therefore by friction. Conversely, Figure 8 shows a variant of the tool 48 that employs mechanical engagement between the fitting 22 and the body 50. Specifically, the fitting 22 and the body 50 have complementary inter-engaging key formations. Those formations are exemplified here by retractable pawls 66 of the body 50 that are opposed to and engageable with recesses 68 in the fitting 22.

The recesses 68 define radially-extending, circumferentially-directed faces against which the extended pawls 66 can bear to transmit torque from the tool 48 to the fitting 22. The recesses 68 may, for example, take the form of longitudinally-extending grooves. The recesses 68 may conveniently be aligned with the hoops 36 where the wall of the fitting 22 is thickest.

When extended radially from the body 50 of the tool 48 into engagement with respective recesses 68 of the fitting 22, the pawls 66 effect mechanical engagement between the tool 48 and the fitting 22. This prevents angular slippage of the fitting 22 relative to the rotating body 50. When rotational friction welding of the fitting 22 has been completed, the pawls 66 can be retracted into the body 50 to disengage them from the recesses 68, allowing the tool 48 to be withdrawn from the conjoined pipe sections 10.

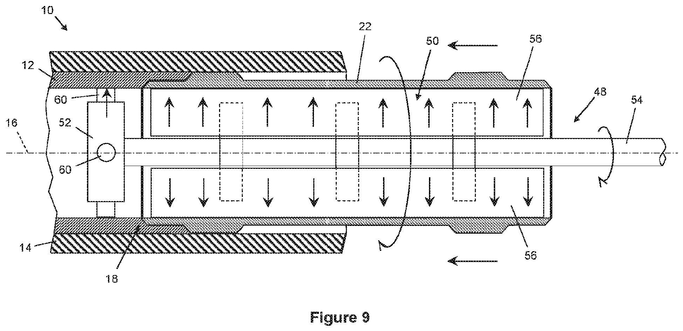

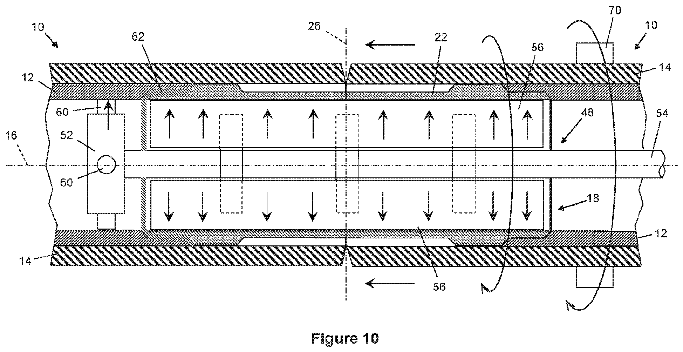

In the embodiments described above, rotational friction welding of a liner bridge fitting 22 to the parent liners 12 is performed simultaneously at both ends of the fitting 22. Whilst simultaneous welding at both ends of the fitting 22 is convenient and preferred, it is not essential. In this respect, Figures 9 and 10 show a further variant in which rotational friction welding is used to fuse a fitting 22 to a parent liner 12 at one end before fusing to a parent liner 12 at the other end of the fitting 22.

Figure 9 shows one end of a fitting 22 inserted into and engaged with the socket of a first pipe section 10. The socket is defined, as before, by female interface formations 18 of the parent liner 12. A tool 48 like that shown in Figures 4 to 6 but provided with only a distal clamp 52 is inserted into the fitting 22. The shoes 56 of the body 50 of the tool 48 are extended radially into engagement with the fitting 22 and the pistons 60 of the clamp 52 are extended radially into engagement with the parent liner 12 to anchor the tool 48. The shaft 54 of the tool 48 is then rotated to turn the body 50 and the fitting 22 about the central longitudinal axis 16, effecting friction welding at the interface between the fitting 22 and the parent liner 12. The resulting fused interface region 62 is shown in Figure 10.

Next, as shown in Figure 10, a second pipe section 10 is brought into end-to-end abutment with the first pipe section 10 while surrounding and locating the other end of the fitting 22. This brings that end of the fitting 22 into engagement with the socket of the second pipe section 10 defined by the female interface formations 18 of its parent liner 12.

With the tool 48 optionally left *in situ* engaged with the fitting 22, the second pipe section 10 is then rotated about the central longitudinal axis 16 by a drive mechanism engaged with the second pipe section 10. Rotation of the second pipe section 10 relative to the first pipe section 10 and therefore relative to the fitting 22 effects friction welding at the interface between the fitting 22 and the parent liner 12 of the second pipe section 10. A weld may then be made between the outer pipes 14 of the abutting pipe sections 14, akin to the weld 64 shown in Figure 7.

Conveniently, the drive mechanism acts externally on the second pipe section 10, for example on a circumferential rail 70 clamped to the exterior of the second pipe section 10 as shown in Figure 10. Alternatively, a drive mechanism could instead act internally on the second pipe section 10, for example via a clamp or mandrel mounted on the shaft 54 of the tool 48.

The tool 48 shown in Figures 9 and 10 relies upon frictional engagement between the shoes 56 and the fitting 22 but could instead, or additionally, provide for mechanical engagement with the fitting 22 like the tool 48 shown in Figure 8. A proximal clamp 52 like that shown in Figures 4 to 6 could also be provided.

By way of example, the fitting 22 may be rotated at an angular or rotational velocity corresponding to 50 rpm to 5000 rpm or to achieve a relative linear or circumferential velocity of 1m/s to 20m/s at an interface between the fitting 22 and a parent liner 12.

The fitting 22 can be rotated continuously relative to the or each parent liner 12 in successive unidirectional full rotations or revolutions as described, or can instead or additionally be rotated intermittently in partial rotations and/or in successively opposite angular directions.

Many other variations are possible within the inventive concept. For example, the tool could be used to convey internal cooling within the abutting pipe sections to control the temperature of the fitting and to allow faster welding.

## Claims

1. A method of joining polymer-lined pipe sections (10) end-to-end, the method comprising:
friction welding a polymer liner bridge fitting (22) to parent liners (12) of the pipe sections (10); and
welding metallic outer pipes (14) of the pipe sections (10) to each other.

2. The method of Claim 1, wherein said friction welding is effected by relative rotational movement between the fitting (22) and the pipe sections (10) about a common longitudinal axis (16).

3. The method of Claim 2, wherein said relative rotational movement comprises successive unidirectional revolutions.

4. The method of Claim 2 or Claim 3, wherein said relative rotational movement comprises partial revolutions.

5. The method of any of Claims 2 to 4, wherein said relative rotational movement is effected in successively opposite angular directions.

6. The method of any of Claims 2 to 5, comprising inserting a spinning tool (48) into the fitting (22), engaging the tool (48) with the fitting (22), and rotating at least part of the tool (48) and the fitting (22) to effect said relative rotational movement.

7. The method of Claim 6, comprising advancing the tool (48) longitudinally within at least one of the pipe sections (10) before engaging the tool (48) with the fitting (22).

8. The method of Claim 6 or Claim 7, comprising anchoring the tool (48) within at least one of the pipe sections (10) before rotating the tool (48) and the fitting (22).

9. The method of any preceding claim, comprising engaging the fitting (22) with the pipe sections (10) telescopically before said friction welding.

10. The method of any preceding claim, comprising forcing the pipe sections (10) axially toward each other during said friction welding.

11. The method of any preceding claim, comprising welding the outer pipes (14) to each other either after friction welding the fitting (22) to the parent liners (12) or while friction welding the fitting (22) to the parent liners (12).

12. The method of any preceding claim, comprising friction welding the fitting (22) to the parent liners (12) simultaneously.

13. The method of Claim 12, comprising, preliminarily:
inserting an end portion (46) of the fitting (22) into an end socket formation (18) of a first of the pipe sections (10) while leaving an opposite end portion (46) of the fitting (22) protruding from that first pipe section (10); and
bringing the outer pipe (14) of a second of the pipe sections (10) into abutting relation with the outer pipe (14) of the first pipe section (10) while receiving the protruding end portion (46) of the fitting (22) into an end socket formation (46) of that second pipe section (10).

14. The method of Claim 13, comprising forcing the fitting (22) axially into abutment with the parent liners (12) of the pipe sections (10) while bringing the outer pipe (14) of the second pipe section (10) into abutting relation with the outer pipe (14) of the first pipe section (10).

15. The method of any of Claims 1 to 11, comprising friction welding the fitting (22) to the parent liner (12) of a first of the pipe sections (10) before friction welding the fitting (22) to the parent liner (12) of a second of the pipe sections.

16. The method of Claim 15, comprising:
inserting an end portion (46) of the fitting (22) into an end socket formation (18) of a first of the pipe sections (10) while leaving an opposite end portion (46) of the fitting (22) protruding from that first pipe section (10);
friction welding the fitting (22) to the parent liner (12) of the first pipe section (10);
bringing the outer pipe (14) of a second of the pipe sections (10) into abutting relation with the outer pipe (14) of the first pipe section (10) while receiving the protruding end portion (46) of the fitting (22) into an end socket formation (46) of that second pipe section (10); and
friction welding the parent liner (12) of the second pipe section (10) to the fitting (22).

17. The method of Claim 16, comprising moving the fitting (22) and holding the first pipe section (10) stationary when friction welding the fitting (22) to the parent liner (12) of the first pipe section (10).

18. The method of Claim 16 or Claim 17, comprising moving the second pipe section (10) and holding the fitting (22) stationary when friction welding the parent liner (12) of the second pipe section (10) to the fitting (22).

19. The method of any preceding claim, comprising cooling friction-welded interfaces between the fitting (22) and the parent liners (12) while applying inward axial pressure from the parent liners (12) to the fitting (22).

20. The method of any preceding claim, comprising cooling friction-welded interfaces between the fitting (22) and the parent liners (12) while applying outward radial pressure to the fitting (22).

## Patentansprüche

1. Verfahren zum stumpfseitigen Verbinden von mit einer Polymerauskleidung versehenen Rohrabschnitten (10), wobei das Verfahren umfasst:
Reibschweißen eines Polymerauskleidungs-Brückenverbindungsstücks (22) an Elternauskleidungen (12) der Rohrabschnitte (10); und
Verschweißen der metallischen Außenrohre (14) der Rohrabschnitte (10) miteinander.

2. Verfahren nach Anspruch 1, wobei das Reibschweißen durch eine relative Drehbewegung zwischen dem Verbindungsstück (22) und den Rohrabschnitten (10) um eine gemeinsame Längsachse (16) erfolgt.

3. Verfahren nach Anspruch 2, wobei die relative Drehbewegung aufeinanderfolgende unidirektionale Umdrehungen umfasst.

4. Verfahren nach Anspruch 2 oder Anspruch 3, wobei die relative Drehbewegung partielle Umdrehungen umfasst.

5. Verfahren nach einem der Ansprüche 2 bis 4, wobei die relative Drehbewegung in aufeinanderfolgenden entgegengesetzten Winkelrichtungen erfolgt.

6. Verfahren nach einem der Ansprüche 2 bis 5, umfassend das Einführen eines Drehwerkzeugs (48) in das Verbindungsstück (22), das Ineingriffbringen des Werkzeugs (48) mit dem Verbindungsstück (22) und das Drehen mindestens eines Teils des Werkzeugs (48) und des Verbindungsstücks (22), um die relative Drehbewegung zu bewirken.

7. Verfahren nach Anspruch 6, umfassend das Vorschieben des Werkzeugs (48) in Längsrichtung in mindestens einem der Rohrabschnitte (10), bevor das Werkzeug (48) mit dem Verbindungsstück (22) in Eingriff gebracht wird.

8. Verfahren nach Anspruch 6 oder Anspruch 7, umfassend das Verankern des Werkzeugs (48) in mindestens einem der Rohrabschnitte (10), bevor das Werkzeug (48) und das Verbindungsstück (22) gedreht werden.

9. Verfahren nach einem der vorstehenden Ansprüche, umfassend das teleskopartige Ineingriffbringen des Verbindungsstücks (22) mit den Rohrabschnitten (10) vor dem Reibschweißen.

10. Verfahren nach einem der vorstehenden Ansprüche, umfassend das Drücken der Rohrabschnitte (10) axial aufeinander zu während des Reibschweißens.

11. Verfahren nach einem der vorstehenden Ansprüche, umfassend das Verschweißen der Außenrohre (14) miteinander entweder nach dem Reibschweißen des Verbindungsstücks (22) an die Elternauskleidungen (12) oder während des Reibschweißens des Verbindungsstücks (22) an die Elternauskleidungen (12).

12. Verfahren nach einem der vorstehenden Ansprüche, umfassend das gleichzeitige Reibschweißen des Verbindungsstücks (22) an die Elternauskleidungen (12).

13. Verfahren nach Anspruch 12, umfassend vorbereitend:
Einführen eines Endabschnitts (46) des Verbindungsstücks (22) in eine Endmuffenformation (18) eines ersten der Rohrabschnitte (10), während ein gegenüberliegender Endabschnitt (46) des Verbindungsstücks (22) aus diesem ersten Rohrabschnitt (10) herausragen gelassen wird; und
Bringen des Außenrohrs (14) eines zweiten der Rohrabschnitte (10) in Anstoßbeziehung zu dem Außenrohr (14) des ersten Rohrabschnitts (10), während der herausragende Endabschnitt (46) des Verbindungsstücks (22) in eine Endmuffenformation (46) dieses zweiten Rohrabschnitts (10) aufgenommen wird.

14. Verfahren nach Anspruch 13, umfassend das Drücken der Verbindungsstücks (22) axial bis zum Anstoßen an die Elternauskleidungen (12) der Rohrabschnitte (10), während das Außenrohr (14) des zweiten Rohrabschnitts (10) in Anstoßbeziehung zu dem Außenrohr (14) des ersten Rohrabschnitts (10) gebracht wird.

15. Verfahren nach einem der Ansprüche 1 bis 11, umfassend das Reibschweißen des Verbindungsstücks (22) an die Elternauskleidung (12) eines ersten der Rohrabschnitte (10) vor dem Reibschweißen des Verbindungsstücks (22) an die Elternauskleidung (12) eines zweiten der Rohrabschnitte.

16. Verfahren nach Anspruch 15, umfassend:
Einführen eines Endabschnitts (46) des Verbindungsstücks (22) in eine Endmuffenformation (18) eines ersten der Rohrabschnitte (10), während ein gegenüberliegender Endabschnitt (46) des Verbindungsstücks (22) aus diesem ersten Rohrabschnitt (10) herausragen gelassen wird;
Reibschweißen des Verbindungsstücks (22) an die Elternauskleidung (12) des ersten Rohrabschnitts (10);
Bringen des Außenrohrs (14) eines zweiten der Rohrabschnitte (10) in Anstoßbeziehung zu dem Außenrohr (14) des ersten Rohrabschnitts (10), während der herausragende Endabschnitt (46) des Verbindungsstücks (22) in eine Endmuffenformation (46) dieses zweiten Rohrabschnitts (10) aufgenommen wird; und
Reibschweißen der Elternauskleidung (12) des zweiten Rohrabschnitts (10) an das Verbindungsstück (22).

17. Verfahren nach Anspruch 16, umfassend das Bewegen des Verbindungsstücks (22) und das Stationär-Halten des ersten Rohrabschnitts (10), wenn das Verbindungsstück (22) an die Elternauskleidung (12) des ersten Rohrabschnitts (10) reibgeschweißt wird.

18. Verfahren nach Anspruch 16 oder Anspruch 17, umfassend das Bewegen des zweiten Rohrabschnitts (10) und das Stationär-Halten des Verbindungsstücks (22), wenn die Elternauskleidung (12) des zweiten Rohrabschnitts (10) an das Verbindungsstück (22) reibgeschweißt wird.

19. Verfahren nach einem der vorstehenden Ansprüche, umfassen das Kühlen von reibgeschweißten Grenzflächen zwischen dem Verbindungsstück (22) und den Elternauskleidungen (12), während ein nach innen gerichteter axialer Druck von den Elternauskleidungen (12) aus auf das Verbindungsstück (22) ausgeübt wird.

20. Verfahren nach einem der vorstehenden Ansprüche, umfassend das Kühlen von reibgeschweißten Grenzflächen zwischen dem Verbindungsstück (22) und den Elternauskleidungen (12), während ein nach außen gerichteter radialer Druck auf das Verbindungsstück (22) ausgeübt wird.

## Revendications

1. Procédé de raccordement bout à bout de sections de conduite à revêtement intérieur en polymère (10), le procédé comprenant :
souder par friction un raccord de jonction de revêtements intérieurs en polymère (22) à des revêtements intérieurs parents (12) des sections de conduite (10) ; et
souder entre elles des conduites extérieures métalliques (14) des sections de conduite (10).

2. Procédé selon la revendication 1, dans lequel ledit soudage par friction est réalisé par un mouvement de rotation relatif entre le raccord (22) et les sections de conduite (10) autour d'un axe longitudinal commun (16).

3. Procédé selon la revendication 2, dans lequel ledit mouvement de rotation relatif comprend des tours unidirectionnels successifs.

4. Procédé selon la revendication 2 ou la revendication 3, dans lequel ledit mouvement de rotation relatif comprend des tours partiels.

5. Procédé selon l'une quelconque des revendications 2 à 4, dans lequel ledit mouvement de rotation relatif est réalisé dans des sens angulaires successivement opposés.

6. Procédé selon l'une quelconque des revendications 2 à 5, comprenant le fait d'insérer un outil rotatif (48) dans le raccord (22), le fait de mettre l'outil (48) en prise avec le raccord (22), et le fait de mettre au moins une partie de l'outil (48) et le raccord (22) en rotation afin de réaliser ledit mouvement de rotation relatif.

7. Procédé selon la revendication 6, comprenant le fait de faire avancer l'outil (48) longitudinalement à l'intérieur d'au moins une des sections de conduite (10) avant de mettre l'outil (48) en prise avec le raccord (22).

8. Procédé selon la revendication 6 ou la revendication 7, comprenant le fait de fixer l'outil (48) à l'intérieur d'au moins une des sections de conduite (10) avant de mettre l'outil (48) et le raccord (22) en rotation.

9. Procédé selon l'une quelconque des revendications précédentes, comprenant le fait de mettre le raccord (22) en prise avec les sections de conduite (10) de manière télescopique avant ledit soudage par friction.

10. Procédé selon l'une quelconque des revendications précédentes, comprenant le fait d'appliquer une force sur les sections de conduite (10) pour les solliciter axialement l'une vers l'autre durant ledit soudage par friction.

11. Procédé selon l'une quelconque des revendications précédentes, comprenant le fait de souder entre elles les conduites extérieures (14) soit après le soudage par friction du raccord (22) aux revêtements intérieurs parents (12), soit pendant le soudage par friction du raccord (22) aux revêtements intérieurs parents (12).

12. Procédé selon l'une quelconque des revendications précédentes, comprenant le fait de souder par friction le raccord (22) aux revêtements intérieurs parents (12) de façon simultanée.

13. Procédé selon la revendication 12, comprenant, préalablement :
insérer une partie d'extrémité (46) du raccord (22) dans une structure de réceptacle d'extrémité (18) d'une première section de conduite (10) en laissant une partie d'extrémité opposée (46) du raccord (22) en saillie hors de cette première section de conduite (10) ; et
placer la conduite extérieure (14) d'une seconde section de conduite (10) en appui contre la conduite extérieure (14) de la première section de conduite (10) tout en introduisant la partie d'extrémité saillante (46) du raccord (22) dans une structure de réceptacle d'extrémité (46) de cette seconde section de conduite (10).

14. Procédé selon la revendication 13, comprenant le fait d'appliquer une force sur le raccord (22) pour le solliciter axialement de façon à le placer en appui contre les revêtements intérieurs parents (12) des sections de conduite (10) tout en plaçant la conduite extérieure (14) de la seconde section de conduite (10) en appui contre la conduite extérieure (14) de la première section de conduite (10).

15. Procédé selon l'une quelconque des revendications 1 à 11, comprenant le fait de souder par friction le raccord (22) au revêtement intérieur parent (12) d'une première section de conduite (10) avant de souder par friction le raccord (22) au revêtement intérieur parent (12) d'une seconde section de conduite.

16. Procédé selon la revendication 15, comprenant :
insérer une partie d'extrémité (46) du raccord (22) dans une structure de réceptacle d'extrémité (18) d'une première section de conduite (10) en laissant une partie d'extrémité opposée (46) du raccord (22) en saillie hors de cette première section de conduite (10) ;
souder par friction le raccord (22) au revêtement intérieur parent (12) de la première section de conduite (10) ;
placer la conduite extérieure (14) d'une seconde section de conduite (10) en appui contre la conduite extérieure (14) de la première section de conduite (10) tout en introduisant la partie d'extrémité saillante (46) du raccord (22) dans une structure de réceptacle d'extrémité (46) de cette seconde section de conduite (10) ; et
souder par friction le revêtement intérieur parent (12) de la seconde section de conduite (10) au raccord (22).

17. Procédé selon la revendication 16, comprenant le fait de déplacer le raccord (22) et de maintenir la première section de conduite (10) fixe durant le soudage par friction du raccord (22) au revêtement intérieur parent (12) de la première section de conduite (10).

18. Procédé selon la revendication 16 ou la revendication 17, comprenant le fait de déplacer la seconde section de conduite (10) et de maintenir le raccord (22) fixe durant le soudage par friction du revêtement intérieur parent (12) de la seconde section de conduite (10) au raccord (22).

19. Procédé selon l'une quelconque des revendications précédentes, comprenant le fait de refroidir des interfaces soudées par friction entre le raccord (22) et les revêtements intérieurs parents (12) tout en appliquant au raccord (22) une pression axiale vers l'intérieur par le biais des revêtements intérieurs parents (12).

20. Procédé selon l'une quelconque des revendications précédentes, comprenant le fait de refroidir des interfaces soudées par friction entre le raccord (22) et les revêtements intérieurs parents (12) tout en appliquant au raccord (22) une pression radiale vers l'extérieur.
